# FASCICULE DE BREVET EUROPEEN

(11) **EP 3 289 181 B1**
(45) Date de publication et mention de la délivrance du brevet: **24.07.2019**
(21) Numéro de dépôt: 16726129.6
(22) Date de dépôt: 28.04.2016
(51) Int. Cl.: F01D 5/14

(54) **AUBE COMPOSITE, COMPRENANT UN RENFORT DE BORD D'ATTAQUE EN UN AUTRE MATERIAU**
VERBUNDSCHAUFEL MIT EINER VORDERKANTENSCHUTZMANTEL AUS EINEM ANDEREN MATERIAL
COMPOSITE BLADE COMPRISING A REINFORCING LEADING EDGE SHEATH MADE OF A DIFFERENT MATERIAL

(30) Priorité: 29.04.2015 FR 1553891
(43) Date de publication de la demande: 07.03.2018
(73) Titulaire: SAFRAN AIRCRAFT ENGINES, 75015 Paris (FR)
(72) Inventeur: DAMIENS, Alexandre, 77550 Moissy-Cramayel (FR); POUZADOUX, Frédéric, Jean-Bernard, 77550 Moissy-Cramayel (FR); NOTARIANNI, Gilles, Pierre-Marie, 77550 Moissy-Cramayel (FR)
(74) Mandataire: Brevalex
(86) Numéro de dépôt international: PCT/FR2016/050997
(87) Numéro de publication internationale: WO 2016/174357

(56) Documents cités:
- EP-A1- 2 811 143
- EP-A2- 2 378 079
- EP-A2- 2 634 368
- GB-A- 2 482 247

## Description

Le sujet de l'invention est une aube composite, comprenant, outre une partie structurale en un premier matériau, un renfort de bord d'attaque en un autre matériau.

Une telle constitution peut être proposée notamment pour des soufflantes à l'entrée de moteurs d'aéronef, ou pour d'autres cercles d'aubes exposés à des projections de corps étrangers solides susceptibles de les endommager par des chocs. Le bord d'attaque, qui est exposé à ces chocs, est formé par le renfort, qui est en un matériau plus résistant à l'impact que celui de la partie structurale. La partie structurale peut ainsi être formée en un matériau composite comprenant du polymère, et le renfort de bord d'attaque en titane. Les documents EP 2 611 143 A1, EP 2 378 079 A2, GB 2 482 247 A et EP 2 634 368 A2 divulguent des aubes équipées de tels renforts.

La jonction entre les deux parties est sujette à des contraintes importantes, notamment en raison des vibrations de service, et on s'est soucié de les diminuer en concevant cette invention.

L'innovation concerne une aube composite selon la revendication 1.

Les prolongements du renfort qui s'étendent sur ses faces d'intrados et d'extrados au-delà du bord d'attaque (dans une direction d'allongement dudit bord d'attaque) en couvrant le pied de l'aube, qui est une partie sans rôle aérodynamique engagée dans un brochage de disque porteur du cercle d'aubes, afin de maintenir l'aube en place. On a plus précisément constaté qu'une dissymétrie des prolongements était bénéfique pour réduire les contraintes s'exerçant à la jonction mentionnée. La dissymétrie concerne plus précisément la partie antérieure, proche du bord d'attaque, des prolongements, qui est sujette aux concentrations de contrainte. Conformément à l'invention, le bord antérieur du prolongement de la face d'extrados est plus éloigné (dans une direction d'allongement du pied de l'aube) du bord d'attaque que celui de la face d'intrados.

Cet éloignement différent peut être obtenu si les prolongements sont limités par un bord antérieur proche du bord d'attaque, un bord postérieur éloigné du bord d'attaque et un arrondi joignant ces deux bords, en rendant l'angle que fait le bord antérieur de la face d'intrados avec le bord d'attaque plus petit que l'angle correspondant que le bord antérieur de la face d'extrados fait avec le bord d'attaque.

Ces aspects, caractéristiques et avantages de l'invention, ainsi que d'autres, seront maintenant décrits en liaison aux figures suivantes :
- les figures 1, 2, 3, 4, 5 et 6 représentent une conception connue d'aube composite à renfort de bord d'attaque ; et
- les figures 7, 8, 9, 10, 11, 12, 13, 14, 15, 16 et 17, deux réalisations purement illustratives de l'invention.

Dans la suite de la description, les termes tels que « haut » et « bas », « dessous » et « dessus », « inférieur » et « supérieur », ou « montant » et « descendant » se comprennent en référence à une orientation de l'aube où le pied est supposé au-dessous de la partie aérodynamique, et le prolongement du renfort du bord d'attaque, sur lequel porte l'invention, est au-dessous du reste du renfort; ils sont aussi conformes à l'orientation de l'aube sur les figures. Et les termes « avant » et « arrière » se comprennent par rapport au sens conventionnel d'écoulement des gaz dans la turbomachine. Les axes XX, YY et ZZ tracés à certaines des figures, XX le long du pied 2, ZZ du pied 2 au sommet de la pale 1 et YY transversal et perpendiculaire aux précédents, sont aussi introduits pour aider à la compréhension de la description.

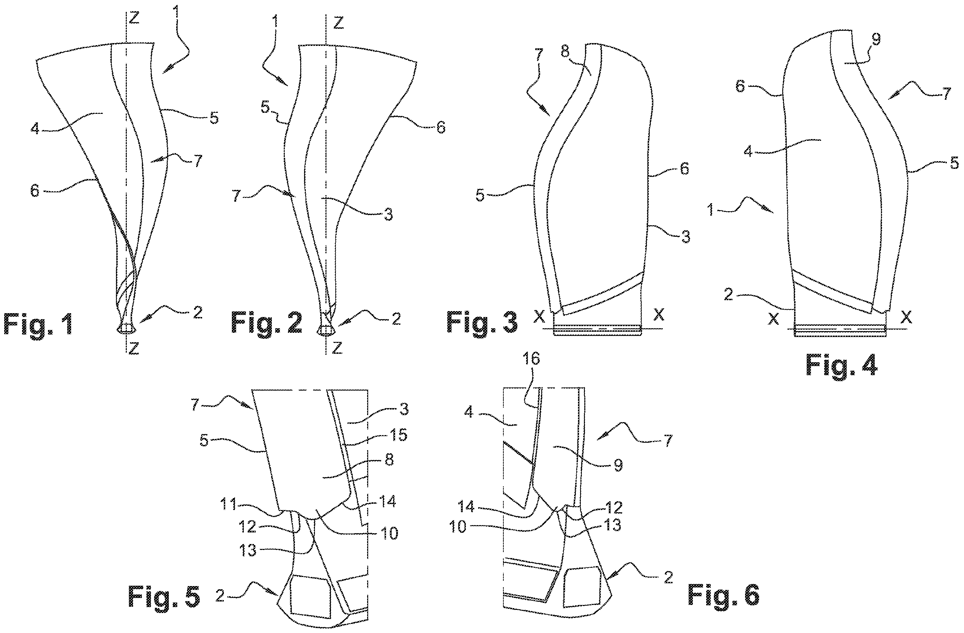

Les figures 1, 2, 3 et 4 représentent respectivement une aube composite de conception connue vers le bord de fuite, vers le bord d'attaque, vers l'extrados, et vers l'intrados ; et les figures 5 et 6 sont des agrandissements des figures 3 et 4 respectivement, au concours du renfort de bord d'attaque et du pied d'aube.

L'aube comprend de façon classique une pale 1 de forme incurvée et irrégulière, s'étendant longitudinalement suivant un axe ZZ, responsable des performances aérodynamiques de l'aube, et un pied 2 au bas de la pale 1, s'élargissant vers le bas de l'aube et s'étendant longitudinalement suivant un axe XX sensiblement orthogonal à l'axe ZZ, de manière à pouvoir être engagé dans un brochage de section complémentaire d'un disque et y retenir l'aube . La pale 1 est limitée par un extrados 3 et un intrados 4 qui se joignent à un bord d'attaque 5 et un bord de fuite 6 opposés. L'aube comprend une partie structurale, qui compose la plus grande partie de la pale 1 et du pied 2, et un renfort 7 situé au bord d'attaque 5 et qui est plus résistant que la partie structurale. Ce renfort 7 comprend, comme on le voit mieux aux figures 5 et 6, une face d'extrados 8 couvrant localement l'extrados 3 de la partie structurale, et une face d'intrados 9 couvrant localement son intrados 4. Les faces 8 et 9 se joignent à l'avant de l'aube pour former le bord d'attaque 5. Les faces 8 et 9 comprennent chacune un prolongement 10, qui s'étend au-dessous de l'extrémité inférieure du bord d'attaque 5 et empiète donc sur le pied 2, en couvrant une partie de sa surface. A la jonction de la pale 1 et du pied 2, une arête 11 des faces 8 et 9 forme l'extrémité inférieure du bord d'attaque 5. A partir de l'arête 11 et à l'opposé du bord d'attaque 5, les prolongements 10 comprennent un bord antérieur 12 oblique, avec une inclinaison dans la direction ZZ descendant vers le bas du pied 2, un arrondi 13, et un bord postérieur 14 oblique, avec une inclinaison dans la direction ZZ remontant progressivement vers le haut du pied 2. Les prolongements 10 sont identiques dans cette conception connue, sauf éventuellement à l'arrière, au plus loin du bord d'attaque 5, où les bords postérieurs 14 peuvent être de longueurs différentes jusqu'à des bords arrière 15 et 16 respectifs de la face d'extrados 8 et de la face d'intrados 9, puisque les faces d'extrados 8 et d'intrados 9 peuvent être de largeurs différentes dans la direction X-X : le bord arrière 15 de la face d'extrados 8 peut ainsi être plus proche du bord d'attaque 5 que le bord arrière 16 de la face d'intrados 9.

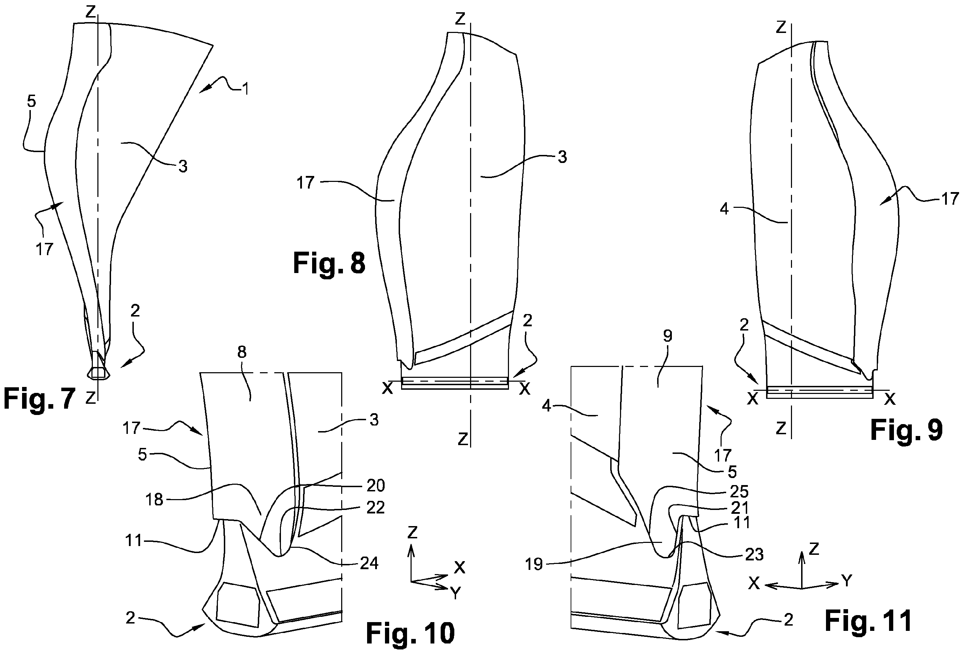

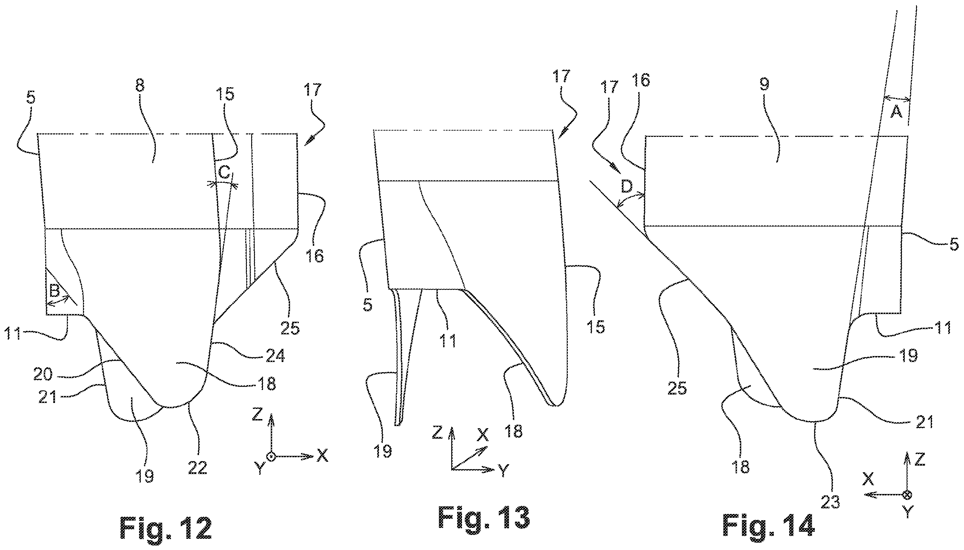

Les figures 7 à 14 représentent l'invention. Les figures 7, 8, 9, 10 et 11, correspondent aux figures 2, 3, 4, 5 et 6 respectivement, et les figures 12, 13 et 14 représentent isolément le renfort de bord d'attaque vers l'extrados, obliquement vers le bord d'attaque, et vers l'intrados.

Le renfort de bord d'attaque porte désormais la référence 17. Il se distingue du renfort 7 de bord d'attaque précédent par les prolongements couvrant le pied 2, qui sont désormais référencés par 18 et 19 pour la face d'extrados 8 et la face d'intrados 9, respectivement.

Les prolongements 18 et 19 sont ici dissymétriques. Cette particularité permet de diminuer les contraintes mécaniques qui s'exercent à la jonction du renfort 17 et de la partie structurale qui constitue le reste de l'aube. En effet, des concentrations de contrainte sont plus susceptibles d'apparaître au bas du renfort 17 et près du bord d'attaque 5, qui est un endroit d'irrégularité de constitution de l'aube. De plus, les sollicitations sont très différentes entre l'extrados 3 et l'intrados 4. Il est donc essentiel de disposer d'une liberté de conception des prolongements 18 et 19 impliquant leur dissymétrie. Une considération importante est que le prolongement 18 du côté de l'extrados 3 gagnera à être placé plus loin du bord d'attaque 5, dans la direction XX, que le prolongement 19 du côté de l'intrados 4. Cela est obtenu en éloignant le bord antérieur 20 du prolongement 18 du côté de l'extrados 8 plus du bord d'attaque 5 que le bord antérieur 21 du prolongement 19 du côté de l'intrados 9 ; dans la réalisation effectivement proposée ici, en rendant le bord antérieur 21 du prolongement 19 de la face d'intrados 9 plus parallèle au profil du bord d'attaque 5 (à sa partie inférieure, représentée sensiblement verticale sur les figures 12 et 14) que le bord antérieur 20 du prolongement 18 de la face d'extrados 8 ; les angles correspondants entre le bord d'attaque 5 et les bords antérieurs 21 et 20 (angles A de la figure 14 et B de la figure 12), où donc A < B, pourront respectivement être inférieur à 30°, préférentiellement entre 5 et 25°, et compris entre 30° et 60°, et préférentiellement entre 35 et 50°,, par exemple. Réciproquement, les bords postérieurs 24 et 25 peuvent faire respectivement des angles C inférieur à 30° et D compris entre 30° et 60°, ou plus généralement D > C, avec les bords 15 et 16 des faces d'extrados 8 et d'intrados 9 éloignés du bord d'attaque 5. Les bords antérieurs 20, 21 et postérieurs 24, 25 sont réunis par des arrondis 22 et 23 utiles pour permettre une bonne fabrication et ne pas créer de concentration de contrainte à un angle de raccordement.

Du fait de la largeur plus grande de la face d'intrados 9 dans la direction XX, le prolongement 19 de ce côté peut être plus large (encore dans la direction XX) que le prolongement 18, avoir une profondeur (dans la drection ZZ) plus grande sous le bord d'attaque 5, et une superficie plus grande aussi.

L'invention peut être mise en oeuvre de bien des façons. Il sera possible de valider toute réalisation envisagée par des calculs par éléments finis.

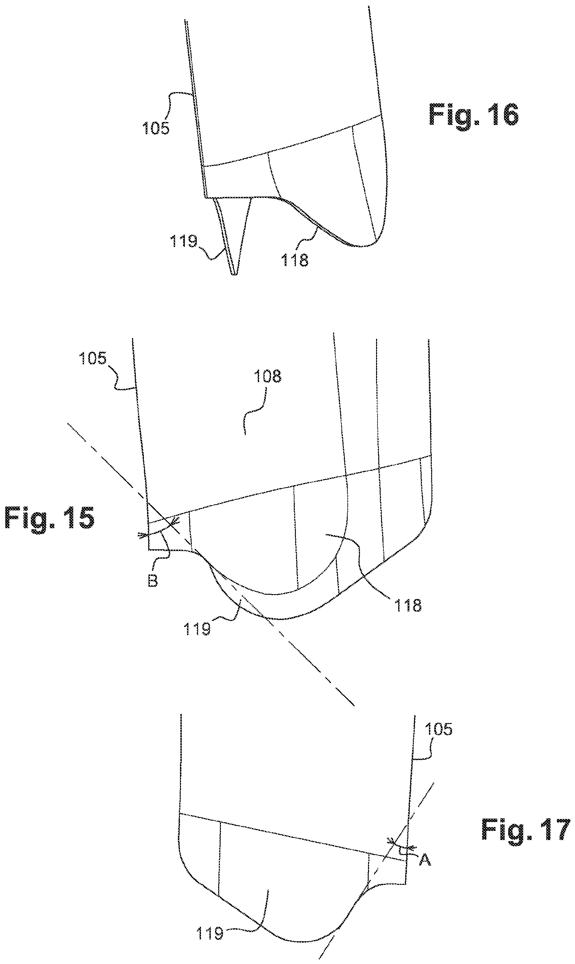

Les figures 15, 16 et 17 illustrent une réalisation différente mais aussi satisfaisante d'un renfort de bord d'attaque, avec les mêmes modalités de représentation que les figures 12, 13 et 14 respectivement; les portions correspondantes portent les références numériques correspondantes augmentées de « 100 » : on retrouve ainsi le bord d'attaque 105, les faces d'intrados 108 et d'extrados 109, et les prolongments 118 et 119. Ici, A = 20° et B = 45° alors que A était égal à 9°, et B à 40°, dans le mode de réalisation précédent. Des diminutions de 30 % des contraintes statiques ont été observées au bord d'attaque du renfort, et de 5 % dans la partie structurale, par rapport à un renfort classique symétrique.

## Revendications

1. Aube composite, comprenant une partie structurale en un matériau et un renfort (17) de bord d'attaque en un autre matériau, le renfort comprenant une face d'intrados (9) et une face d'extrados (8), les faces d'intrados et d'extrados se raccordant au bord d'attaque (5) et comprenant des prolongements (19, 18) respectifs s'étendant au-delà du bord d'attaque dans une direction (ZZ) d'allongement dudit bord d'attaque et couvrant partiellement un pied (2) de l'aube appartenant à la partie structurale, **caractérisée en ce que**, les prolongements étant limités par un bord antérieur (20, 21) proche du bord d'attaque, et un bord postérieur (24, 25) éloigné du bord d'attaque, le bord antérieur (21) de la face d'intrados (9) fait un angle (A) avec le bord d'attaque (5) plus petit qu'un angle (B) que fait le bord antérieur (20) de la face d'extrados (8) avec le bord d'attaque.

2. Aube composite selon la revendication 1, **caractérisée en ce que** le bord antérieur (21) de la face d'intrados (9) fait un angle (A) de 30° au plus avec le bord d'attaque (5), et le bord antérieur (20) de la face d'extrados (8) un angle (B) compris entre 30° et 60° avec le bord d'attaque.

3. Aube composite selon l'une quelconque des revendications 1 ou 2, **caractérisée en ce que** le bord postérieur (25) de la face d'intrados (9) fait un angle (D) avec un bord (16) de la face d'intrados (9) éloigné du bord d'attaque (5) plus grand qu'un angle (C) que fait le bord postérieur (24) de la face d'extrados (8) avec un bord (15) de la face d'extrados (8) éloigné du bord d'attaque (5).

4. Aube composite selon la revendication 3, **caractérisée en ce que** le bord postérieur de la face d'intrados fait un angle (D) compris entre 30° et 60° avec un bord (16) de la face d'intrados (9) éloigné du bord d'attaque (5), et le bord postérieur de la face d'extrados fait un angle (C) de 30° au plus avec un bord (15) de la face d'extrados (8) éloigné du bord d'attaque (5).

5. Aube composite selon l'une quelconque des revendications 1 à 4, **caractérisée en ce que** le bord antérieur et le bord postérieur des prolongements sont joints par un arrondi (22, 23).

6. Aube composite selon l'une quelconque des revendications précédentes, **caractérisée en ce que** la face d'intrados (9) est plus large dans une direction d'allongement (XX) du pied (2) que la face d'extrados (8).

7. Aube composite selon l'une quelconque des revendications précédentes, **caractérisée en ce que** le prolongement (19) de la face d'intrados (9) a une profondeur, dans une direction (ZZ) du pied (2) à un sommet de l'aube, plus grande sous le bord d'attaque (5) que le prolongement (18) de la face d'extrados (8).

8. Aube composite selon l'une quelconque des revendications précédentes, **caractérisée en ce que** le matériau de la partie structurale est un composite, et le matériau du renfort de bord d'attaque est du titane.

9. Aube composite selon l'une quelconque des revendications précédentes, **caractérisée en ce qu'**elle est une aube de soufflante à une entrée d'un moteur d'aéronef.

## Patentansprüche

1. Verbund-Schaufel mit einem Schaufelstruktur-Teil aus einem Material und mit einer Verstärkung (17) der Vorderkante aus einem anderen Material, wobei die Verstärkung eine Druckseite (9) und eine Saugseite (8) umfasst, wobei die Druckseite und die Saugseite an der Vorderkante (5) miteinander verbunden sind und Fortsätze (19 bzw. 18) aufweisen, die sich in einer Ausdehnungsrichtung (ZZ) der genannten Vorderkante über diese Vorderkante hinaus erstrecken und einen Fuß (2) der Schaufel, der zu dem Schaufelstruktur-Teil gehört, teilweise überdecken,
**dadurch gekennzeichnet,**
**dass** angesichts dessen, dass die Fortsätze mit einem vorderen Rand (20, 21), der sich nahe bei der Vorderkante befindet, und einem hinteren Rand (24, 25), der von der Vorderkante abgewandt ist, enden, der vordere Rand (21) der Druckseite (9) mit der Vorderkante (5) einen Winkel (A) bildet, der kleiner ist als ein Winkel (B), den der vordere Rand (20) der Saugseite (8) mit der Vorderkante bildet.

2. Verbund-Schaufel nach Anspruch 1,
**dadurch gekennzeichnet,**
**dass** der vordere Rand (21) der Druckseite (9) einen Winkel (A) von höchstens 30° mit der Vorderkante (5) bildet und der vordere Rand (20) der Saugseite (8) einen Winkel (B) von 30° bis 60° mit der Vorderkante bildet.

3. Verbund-Schaufel nach einem der Ansprüche 1 oder 2,
**dadurch gekennzeichnet,**
**dass** der hintere Rand (25) der Druckseite (9) mit einem von der Vorderkante (5) abgewandten Rand (16) der Druckseite (9) einen Winkel (D) bildet, der größer ist als ein Winkel (C), den der hintere Rand (24) der Saugseite (8) mit einem von der Vorderkante (5) abgewandten Rand (15) der Saugseite (8) bildet.

4. Verbund-Schaufel nach Anspruch 3,
**dadurch gekennzeichnet,**
**dass** der hintere Rand der Druckseite mit einem von der Vorderkante (5) abgewandten Rand (16) der Druckseite (9) einen Winkel (D) von 30° bis 60° bildet, und dass der hintere Rand der Saugseite mit einem von der Vorderkante (5) abgewandten Rand (15) der Saugseite (8) ein Winkel (C) von höchstens 30° bildet.

5. Verbund-Schaufel nach einem der Ansprüche 1 bis 4,
**dadurch gekennzeichnet,**
**dass** der vordere Rand und der hintere Rand der Fortsätze durch eine Rundung (22, 23) miteinander verbunden sind.

6. Verbund-Schaufel nach einem der vorherigen Ansprüche,
**dadurch gekennzeichnet,**
**dass** die Druckseite (9) in einer Ausdehnungsrichtung (XX) des Schaufelfußes (2) breiter ist als die Saugseite (8).

7. Verbund-Schaufel nach einem der vorherigen Ansprüche,
**dadurch gekennzeichnet,**
**dass** der Fortsatz (19) der Druckseite (9) in einer Richtung (ZZ) vom Schaufelfuß (2) bis zu einer Schaufelspitze unter der Vorderkante (5) eine größere Tiefe hat als der Fortsatz (18) der Saugseite (8).

8. Verbund-Schaufel nach einem der vorherigen Ansprüche,
**dadurch gekennzeichnet,**
**dass** das Material des Schaufelstruktur-Teils ein Verbundstoff ist und das Material der Verstärkung Vorderkante Titan ist.

9. Verbund-Schaufel nach einem der vorherigen Ansprüche,
**dadurch gekennzeichnet,**
**dass** sie eine Gebläseschaufel an einem Einlass eines Luftfahrzeug-Triebwerks ist.

## Claims

1. Composite blade, comprising a structural portion made of one material and a leading-edge reinforcement (17) made of another material, the reinforcement comprising a pressure face (9) and a suction face (8), the pressure and suction faces joining at the leading edge (5) and comprising respective extensions (19, 18) extending beyond the leading edge in an extension direction (ZZ) of said leading edge and partially covering a blade root (2) belonging to the structural portion, **characterised in that**, the extensions being limited by a front edge (20, 21) close to the leading edge, and a rear edge (24, 25) at a distance from the leading edge, the front edge (21) of the pressure face (9) forms a smaller angle (A) with the leading edge (5) than an angle (B) formed by the front edge (20) of the suction face (8) with the leading edge.

2. Composite blade according to claim 1, **characterised in that** the front edge (21) of the pressure face (9) forms an angle (A) of not more than 30° with the leading edge (5), and the front edge (20) of the suction face (8) an angle (B) between 30° and 60° with the leading edge.

3. Composite blade according to any one of claims 1 or 2, **characterised in that** the rear edge (25) of the pressure face (9) forms a greater angle (D) with an edge (16) of the pressure face (9) remote from the leading edge (5) than an angle (C) formed by the rear edge (24) of the suction face (8) with an edge (15) of the suction face (8) remote from the leading edge (5).

4. Composite blade according to claim 3, **characterised in that** the rear edge of the pressure face forms an angle (D) between 30° and 60° with an edge (16) of the pressure face (9) at a distance from the leading edge (5), and the rear edge of the suction face forms an angle (C) of not more than 30° with an edge (15) of the suction face (8) at a distance from the leading edge (5).

5. Composition blade according to any one of claims 1 to 4, **characterised in that** the front edge and the rear edge of the extensions are joined by a rounded section (22, 23).

6. Composite blade according to any one of the preceding claims, **characterised in that** the pressure face (9) is wider in an extension direction (XX) of the root (2) than the suction face (8).

7. Composite blade according to any one of the preceding claims, **characterised in that** the extension (19) of the pressure face (9) has a greater depth, in a direction (ZZ) from the root (2) to a vertex of the blade, below the leading edge (5) than the extension (18) of the suction face (8).

8. Composite blade according to any one of the preceding claims, **characterised in that** the material of the structural portion is a composite, and the material of the leading-edge reinforcement is titanium.

9. Composite blade according to any one of the preceding claims, **characterised in that** it is a fan blade at an aircraft engine inlet.
